# EUROPEAN PATENT SPECIFICATION

(11) **EP 3 893 029 B1**
(45) Date of publication and mention of the grant of the patent: **05.11.2025**
(21) Application number: 19893751.8
(22) Date of filing: 06.12.2019
(51) Int. Cl.: G02B 1/14, G02C 7/10

(54) **OPTICAL MEMBER, CURABLE COMPOSITION, AND PRODUCTION METHOD FOR OPTICAL MEMBER**
OPTISCHES ELEMENT, HÄRTBARE ZUSAMMENSETZUNG UND HERSTELLUNGSVERFAHREN FÜR OPTISCHES ELEMENT
ÉLÉMENT OPTIQUE AINSI QUE PROCÉDÉ DE FABRICATION DE CELUI-CI, ET COMPOSITION DURCISSABLE

(30) Priority: 06.12.2018 JP 2018229134
(43) Date of publication of application: 13.10.2021
(73) Proprietor: Hoya Lens Thailand Ltd., Pathumthani 12130 (TH)
(72) Inventor: SEKIGUCHI, Yusuke, Tokyo 160-8347 (JP); YAMASHITA, Teruo, Tokyo 160-8347 (JP); KUBOTA, Shogo, Tokyo 160-8347 (JP)
(74) Representative: Hoffmann Eitle
(86) International application number: PCT/JP2019/047834
(87) International publication number: WO 2020/116616

(56) References cited:
- EP-A2- 0 615 144
- WO-A1-2009/014086
- WO-A1-2012/026151
- JP-A- 2001 288 412
- JP-A- 2001 288 412
- JP-A- 2005 010 618
- JP-A- H05 287 241
- JP-A- H08 120 065
- US-A- 5 830 578
- US-A1- 2017 240 769

## Description

### Technical Field

The present disclosure relates to an optical member having a hard coat layer, and to a method for producing an optical member.

### Background Art

While optical members such as a plastic eyeglass lens are lightweight and excellent in impact resistance as compared to glass, they are insufficient in surface hardness. Therefore, such optical members are covered with a hard coat layer to enhance the scratch resistance.

JP-A-09-265059 describes an eyeglass lens containing, in a lens substrate and/or a hard coat layer formed thereon, one or more ultraviolet absorbers selected from a benzophenone ultraviolet absorber, a benzotriazole ultraviolet absorber, a cyanoacrylate ultraviolet absorber and a sterically hindered amine ultraviolet absorber, and having a multi-layer antireflective film including a titanium dioxide layer having at least a predetermined thickness, formed on the hard coat layer. This document describes that the eyeglass lens can block ultraviolet light having a wavelength of ≤ 400 nm, and can prevent the occurrence of cracking in the antireflective film even when the lens is exposed to ultraviolet irradiation during its long-term outdoor use.

JP-A-2001-288412 relates to a coating composition for forming a coating layer on the surface of a plastic lens substrate having a primer layer, comprising (A) specified composite particles comprising 2 or more types of metal oxide and having a particle size of 1-100 µm, (B) silane compound having at least one polymerizable reactive group and (C) a UV absorber.

JP-A-2005-010618 discloses a plastic lens substrate having a refractive index of ≥ 1.60; and having, provided thereon in order, a primer layer, a hard coat layer, and an antireflection layer comprising an inorganic substance.

WO 2012/026151 describes a photosensitive paste comprising an inorganic component containing a low softening point glass powder, a photosensitive organic component, a benzotriazole compound of a specified general formula (1), a photopolymerization initiator, and a solvent.

### Summary of Invention

### Technical Problem

However, the hard coat layer described in JP-A-09-265059 sometimes suffers from cracking in the hard coat layer when the optical member is exposed to ultraviolet light and high-humidity conditions over a long period of time. Especially when the hard coat layer contains an inorganic oxide having an absorption edge at a wavelength of 300-450 nm, cracking tends to occur in the hard coat layer perhaps because of the inorganic oxide absorbing light energy and becoming an excited state. For example, in a weathering test as performed under severe conditions of light irradiation energy, irradiation time, and humidity and heat, cracking is likely to occur especially when both light irradiation conditions and humidity/heat conditions are made severe.

Embodiments of the present disclosure relate to an optical member which exhibits excellent cracking resistance under ultraviolet irradiation and high-humidity conditions, and a method for producing the optical member. Solution to Problem

The present inventors have found that inclusion of an ultraviolet absorber and an antioxidant in a hard coat layer enables the hard coat layer to exhibit excellent cracking resistance under ultraviolet irradiation and high-humidity conditions.

Thus, the present invention provides an eyeglass lens comprising
(i) a plastic substrate and
(ii) a hard coat layer which is a cured product of a curable composition comprising
   (a) an inorganic oxide containing an inorganic oxide (a1) having an absorption edge at a wavelength of 300-450 nm and being at least one of titanium oxide, zirconium oxide, tantalum oxide, antimony oxide, tin oxide, tungsten oxide and yttrium oxide,
   (b) an UV-absorber, which is a compound of formula (1): 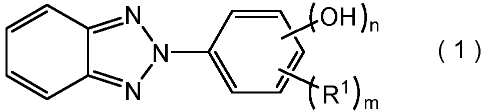 wherein n is an integer of 1-3, R¹ is an aliphatic C₁₋₃-hydrocarbon group, and m is 0 or 1, and
   (c) an antioxidant.

Also, the present invention provides a method for producing an eyeglass lens, comprising coating a curable composition as defined above onto a plastic substrate and curing the composition to form a hard coat layer.

Preferred embodiments of the invention are as defined in the appended dependent claims.

### Advantageous Effects of Invention

The above-described embodiments of the present disclosure can provide an optical member which exhibits excellent cracking resistance under ultraviolet irradiation and high-humidity conditions, and a method for producing the optical member.

### Brief Description of Drawings

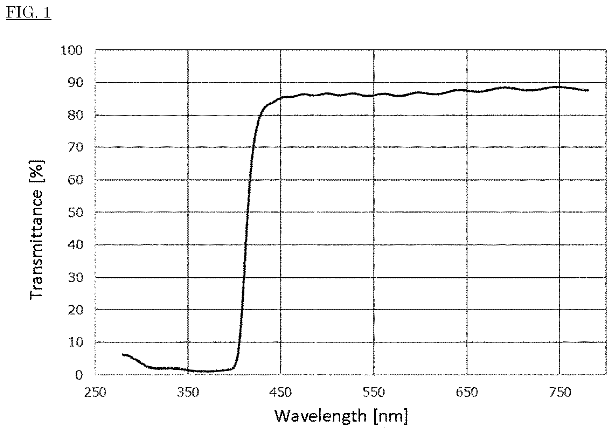

FIG. 1 is a transmittance spectrum of the eyeglass lens obtained in Example 1.

### Description of Embodiments

### [Optical Member]

An optical member according to an embodiment of the present disclosure includes a plastic substrate and a hard coat layer.

The hard coat layer is a cured product of a curable composition including an inorganic oxide, an ultraviolet absorber, and an antioxidant, and the hard coat layer contains an inorganic oxide having an absorption edge at a wavelength of 300-450 nm.

Such a feature makes it possible to provide an optical member which exhibits excellent cracking resistance under ultraviolet irradiation and high-humidity conditions, a curable composition, and a method for producing the optical member.

Terms as used herein have the following meanings.

"Active ingredients of the curable composition" refers to ingredients other than a solvent (including water), contained in the curable composition.

"The number of carbon atoms" of a group having a substituent refers to the number of carbon atoms of the moiety excluding the substituent.

"Inorganic oxide having an absorption edge at a wavelength of 300-450 nm" refers to such an inorganic oxide that the lower limit (absorption edge) of the transmission wavelength range of a vapor-deposited film formed solely of the inorganic oxide is 300-400 nm.

Titanium oxide has an absorption edge at 400 nm, cesium oxide at 400 nm, tantalum oxide at 350 nm, zirconium oxide at 330 nm, and yttrium oxide at 300 nm.

Silicon oxide has an absorption edge at 200 nm, aluminum oxide at 200 nm, and magnesium oxide at 200 nm.

For an inorganic oxide other than the above oxides, the transmission wavelength range of a vapor-deposited film formed solely of the inorganic oxide is measured, and the lower limit is determined as the absorption edge of the inorganic oxide.

Examples of the optical member include an eyeglass lens, a sports goggle, a sun visor, a safety shield, and a helmet shield. Among them, an eyeglass lens is preferred.

### <Hard Coat Layer>

The hard coat layer is a cured product of a curable composition.

The hard coat layer is formed, for example, by coating the curable composition onto a plastic substrate, and curing the curable composition. The hard coat layer is preferably formed on both surfaces of the plastic substrate.

### [Curable Composition]

From the viewpoint of obtaining an optical member which exhibits excellent cracking resistance under ultraviolet irradiation and high-humidity conditions, the curable composition contains an inorganic oxide, an ultraviolet absorber, and an antioxidant.

### (Inorganic Oxide)

The curable composition contains an inorganic oxide having an absorption edge at a wavelength of 300-450 nm. The inclusion of the inorganic oxide having an absorption edge at a wavelength of 300-450 nm can increase the refractive index or reduce the ultraviolet transmittance of the curable composition. On the other hand, by the inclusion of the inorganic oxide, the inorganic oxide, which has absorbed ultraviolet light and has been excited, will affect cracking in the hard coat layer.

In the curable composition and in the cured product, the content of the inorganic oxide having an absorption edge at a wavelength of 300-450 nm is, for example, ≥ 10 mass% per 100 mass% of the total amount of inorganic oxide. The content of the inorganic oxide having an absorption edge at a wavelength of 300-450 nm may be 10-100 mass%, or 30-100 mass%, or 50-100 mass%, or 60-100 mass% of the total amount of inorganic oxide.

The inorganic oxide having an absorption edge at a wavelength of 300-450 nm is at least one of titanium oxide, zirconium oxide, tantalum oxide, antimony oxide, tin oxide, tungsten oxide, and yttrium oxide.

When titanium oxide is contained in particular, cracking is likely to occur in the hard coat layer under ultraviolet irradiation and high-humidity conditions.

In the curable composition and in the cured product, the content of titanium oxide may be 10-100 mass%, or 15-60 mass%, or 20-50 mass%, or 25-40 mass% per 100 mass% of the total amount of inorganic oxide.

On the other hand, examples of inorganic oxides, not corresponding to the inorganic oxide having an absorption edge at a wavelength of 300-450 nm, include silicon oxide, aluminum oxide, and magnesium oxide. These oxides may be used singly or in a combination of two or more.

An inorganic oxide sol of inorganic oxide particles or the like may be added as an inorganic oxide.

The inorganic oxide particles may be surface-treated with an organic processing agent.

The average particle size of the inorganic oxide particles is preferably 1-100 nm, more preferably 5-50 nm, and even more preferably 8-30 nm.

Values of the average particle size of the inorganic oxide particles are herein calculated from data on specific surface area as determined by the BET (Brunauer-Emmet-Teller equation) method.

The content of inorganic oxide is preferably 10-80 mass%, more preferably 20-70 mass%, and even more preferably 30-65 mass% per 100 mass% of the total amount of the active ingredients of the curable composition.

The content of inorganic oxide in the cured product is preferably 10-80 mass%, more preferably 20-75 mass%, even more preferably 40-70 mass%, and still more preferably 50-70 mass%.

An inorganic oxide sol, which is a dispersion of the inorganic oxide particles in an organic solvent, may be used in the curable composition.

The organic solvent for use in the inorganic oxide sol may include, for example, an ether solvent, an ester solvent, an acetal solvent, and a non-polar solvent. Specific examples of the organic solvent include methanol, propylene glycol monomethyl ether (hereinafter also referred to as "PGM"), methyl ethyl ketone, and ethylene glycol mono-n-propyl ether.

When such an inorganic oxide sol is used, the inorganic oxide particles colloidally disperse in the curable composition. This achieves the effect of preventing the occurrence of a phenomenon of uneven distribution of the inorganic oxide particles in a coating film.

### (Ultraviolet Absorber)

The ultraviolet absorber is a benzotriazole compound of the formula (1): 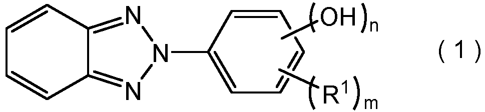
wherein n is an integer of 1-3, R¹ is an aliphatic hydrocarbon group having 1-3 carbon atoms, and m is 0 or 1.
n is preferably 2 or 3, more preferably 2 from the viewpoint of obtaining excellent solubility in the curable composition.
R¹ is, for example, methyl, ethyl or propyl. Among them, methyl is preferred.
m is preferably 0.

Examples of preferred benzotriazole compounds include 2-(2,4-dihydroxyphenyl)-2H-benzotriazole, and 2-(2-hydroxy-5-methylphenyl)-2H-benzotriazole, Among them, 2-(2,4-dihydroxyphenyl)-2H-benzotriazole is more preferred from the viewpoint of enhancing the transparency of the hard coat layer.

From the viewpoint of obtaining excellent cracking resistance, the content of the ultraviolet absorber is preferably 0.5-15 mass%, more preferably 1-13 mass%, even more preferably 3-12 mass%, and still more preferably 4-12 mass% per 100 mass% of the total amount of the active ingredients of the curable composition.

From the viewpoint of obtaining excellent cracking resistance, the content of the ultraviolet absorber in the cured product is preferably 0.5-15 mass%, more preferably 1-13 mass%, even more preferably 3-12 mass%, and still more preferably 4-12 mass%.

When the below-described organosilane compound is contained, the content of the ultraviolet absorber in the cured product is a theoretical value calculated in the following manner: It is assumed that Si-O-Si is formed from two Si-OR moieties of an organosilane compound, and all the -OR groups are eliminated. Therefore, the content of the ultraviolet absorber is calculated by subtracting the amount of the eliminated Si-OR groups.

### (Antioxidant)

The antioxidant is preferably an organic compound having at least one hydroxy group from the viewpoint of obtaining excellent solubility in the curable composition.

The antioxidant is, for example, a phenolic antioxidant.

Examples of the phenolic antioxidant include triethylene glycol-bis[3-(3-tert-butyl-5-methyl-4-hydroxyphenyl)propionate ], 1,6-hexanediol-bis[3-(3,5-di-tert-butyl-4-hydroxyphenyl)propio nate], pentaerythritol-tetrakis[3-(3,5-di-tert-butyl-4-hydroxyphenyl) propionate], octadecyl-3-(3,5-di-tert-butyl-4-hydroxyphenyl)propionate, 1,3,5-trimethyl-2,4,6-tris(3,5-di-tert-butyl-4-hydroxybenzyl)b enzene, N,N-hexamethylenebis(3,5-di-tert-butyl-4-hydroxy-hydrocinnamid e), 3,5-di-tert-butyl-4-hydroxy-benzylphophonate-diethyl ester, tris(3,5-di-tert-butyl-4-hydroxybenzyl)isocyanurate, 3,9-bis{1,1-dimethyl-2-[β-(3-tert-butyl-4-hydroxy-5-methylphen yl)propionyloxy]ethyl}-2,4,8,10-tetraoxaspiro[5,5]undecane, 2,6-di-tert-butyl-p-cresol (hereinafter also referred to as "BHT"), and 2,6-di-tert-butyl-4-ehylphenol. Among them, BHT is preferred.

From the viewpoint of obtaining excellent cracking resistance, the content of the antioxidant is preferably 0.1-15 mass%, more preferably 0.5-12 mass%, even more preferably 1-10 mass%, still more preferably 1-8 mass%, and still more preferably 1-5 mass% per 100 mass% of the total amount of the active ingredients of the curable composition.

From the viewpoint of obtaining excellent cracking resistance, the content of the antioxidant in the cured product is preferably 0.1-15 mass%, more preferably 0.5-13 mass%, even more preferably 1-12 mass%, still more preferably 1-10 mass%, still more preferably 1-8 mass%, and still more preferably 1-5 mass%.

### (Organosilane Compound)

The curable composition may contain an organosilane compound.

The organosilane compound has, for example, an organosilane moiety and an epoxy group. The organosilane moiety refers to a moiety having a silicon-carbon bond. The epoxy group refers to a three-membered ring moiety formed of carbon-carbon-oxygen.

The organosilane compound is preferably a compound represented by the formula (2): 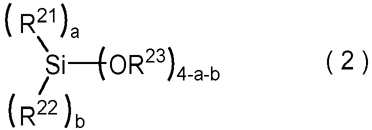 wherein R²¹ is a monovalent C₁₋₂₀-hydrocarbon group having an epoxy group or an epoxy group-containing substituent, R²² is alkyl, aryl, aralkyl or acyl, R²³ is alkyl, aryl, aralkyl or acyl, a is an integer of 1-4, and b is an integer of 0-3. (a + b) is an integer of ≤ 3.

The functional group in R²¹ is, for example, an epoxy group or a glycidyloxy group.

The number of carbon atoms of the hydrocarbon group of R²¹ is preferably ≥ 2, more preferably ≥ 3, and is preferably ≤ 15, more preferably ≤ 12, and even more preferably ≤ 10. The number of carbon atoms refers to the total number of carbon atoms of the hydrocarbon group containing the substituent.

Examples of R²¹ include γ-glycidoxymethyl, γ-glycidoxyethyl, γ-glycidoxypropyl, β-epoxycyclohexylmethyl, β-epoxycyclohexylethyl, and β-epoxycyclohexylpropyl.

The alkyl group of each of R²² and R²³ is preferably linear, branched or cyclic C₁₋₈-alkyl.

Examples of the alkyl group of each of R²² and R²³ include methyl, ethyl, n-propyl, isopropyl, n-butyl, isobutyl, sec-butyl, tert-butyl, pentyl, hexyl, cyclopentyl, and cyclohexyl.

The aryl group of each of R²² and R²³ is preferably a C₆₋₁₀-aryl group. The aryl group is, for example, phenyl or tolyl.

The aralkyl group of each of R²² and R²³ is preferably a C₇₋₁₀-aralkyl group. The aralkyl group is, for example, benzyl or phenethyl.

The acyl group of each of R²² and R²³ is preferably a C₂₋₁₀-acyl group. The acyl group is, for example, acetyl.

Among them, R²² and R²³ are each preferably methyl or ethyl.
a is preferably an integer of 1-3, more preferably an integer of 1 or 2, and even more preferably 1.
b is preferably an integer of 0-3, more preferably an integer of 0 or 1, and even more preferably 0.

When a plurality of R^{21'} s exist in the compound of the formula (2), the R²¹'s may be the same or different from each other. The same holds true for R²² and R²³.

Examples of the organosilane compound include 3-glycidoxypropyltrimethoxysilane, 3-glycidoxypropylmethyldimethoxysilane, 3-glycidoxypropylmethyldiethoxysilane, 3-glycidoxypropyltriethoxysilane, 3-isocyanatepropyltriethoxysilane, 3-aminopropyltriethoxysilane, 2-(3,4-epoxycyclohexyl)ethyltrimethoxysilane, and 3-ethyl-3-{ [3-(triethoxysilyl)propoxy]methyl}oxetane. Among them, 3-glycidoxypropyltrimethoxysilane, 3-isocyanatepropyltriethoxysilane, and 3-aminopropyltriethoxysilane are preferred, and a combination of 3-glycidoxypropyltrimethoxysilane, 3-isocyanatepropyltriethoxysilane and 3-aminopropyltriethoxysilane is more preferred.

The content of the organosilane compound is preferably 5-80 mass%, more preferably 10-70 mass%, even more preferably 15-60 mass%, and still more preferably 30-50 mass% per 100 mass% of the total amount of the active ingredients of the curable composition.

The content of a moiety derived from the organosilane compound in the cured product is preferably 5-80 mass%, more preferably 10-70 mass%, even more preferably 15-60 mass%, and still more preferably 20-50 mass%.

The content of a moiety derived from the organosilane compound in the cured product is a theoretical value as calculated by subtracting the amount of -OR groups eliminated based on the assumption that all the -OR groups are eliminated to form Si-O-Si.

### (Polyfunctional Epoxy Compound)

The curable composition may contain a polyfunctional epoxy compound. The polyfunctional epoxy compound is preferably not an organosilane compound.

Examples of the polyfunctional epoxy compound include sorbitol polyglycidyl ether, pentaerythritol polyglycidyl ether, trimethylolpropane polyglycidyl ether, resorcinol diglycidyl ether, neopentyl glycol diglycidyl ether, 1,6-hexanediol diglycidyl ether, hydrogenated bisphenol A diglycidyl ether, ethylene-polyethylene glycol diglycidyl ether, propylene-polypropylene glycol diglycidyl ether, allyl glycidyl ether, 2-ethylhexyl glycidyl ether, phenyl glycidyl ether, phenol polyethylene oxide adduct glycidyl ether, p-tert-butylphenyl glycidyl ether, lauryl alcohol polyethylene oxide adduct glycidyl ether, polybutadiene diglycidyl ether, and polyglycerol polyglycidyl ether.

When the curable composition contains a polyfunctional epoxy compound, the content of the polyfunctional epoxy compound is preferably 1-30 mass%, more preferably 3-20 mass%, and even more preferably 5-10 mass% of the total amount of the active ingredients of the curable composition.

When the curable composition contains a polyfunctional epoxy compound, the content of a moiety derived from the polyfunctional epoxy compound in the cured product is preferably 1-30 mass%, more preferably 3-20 mass%, and even more preferably 5-10 mass%.

### (Curing Catalyst)

The curable composition may contain a curing catalyst. The curing catalyst is, for example, tris(acetylacetonato)aluminum (III) [Al(acac)₃].

The content of the curing catalyst is preferably 0.01-20 mass%, more preferably 0.02-10 mass%, and even more preferably 0.04-1 mass% per 100 mass% of the total amount of the active ingredients of the curable composition.

The content of the curing catalyst in the cured product is preferably 0.1-20 mass%, more preferably 0.5-10 mass%, and even more preferably 1-5 mass%.

The curable composition may contain an organic solvent in order to form a uniform film.

The organic solvent is preferably at least one solvent selected from an ether solvent, an ester solvent, an acetal solvent, and a non-polar solvent. Specific examples include propylene glycol monomethyl ether (hereinafter also referred to as "PGM"), diacetone alcohol, methyl ethyl ketone, and ethylene glycol mono-n-propyl ether.

In addition to the above-described components, the curable composition can also contain known additives such as a leveling agent, a fluorine compound, a dye, a pigment, a photochromic agent, and an antistatic agent.

Among them, a fluorine compound is preferred from the viewpoint of enhancing cracking resistance under ultraviolet irradiation and high-humidity conditions.

Examples of the fluorine compound include sodium fluoride, potassium fluoride, hydrofluosilicic acid, potassium silicofluoride, fluoroboric acid, tin borofluoride, copper borofluoride, lead borofluoride, zinc borofluoride, sodium borofluoride, potassium borofluoride, ammonium acid fluoride, ammonium fluoride, zirconium potassium fluoride, potassium fluorotitanate, purified calcium fluoride, and potassium hexafluorophosphate.

The content of the fluorine compound is preferably 0.1-20 mass%, more preferably 0.5-10 mass%, and even more preferably 1-5 mass% per 100 mass% of the total amount of the active ingredients of the curable composition.

The content of the fluorine compound in the cured product is preferably 0.1-20 mass%, more preferably 0.5-10 mass%, and even more preferably 1-5 mass%.

The total amount of the active ingredients of the curable composition is preferably 1-70 mass%, more preferably 5-50 mass%, and even more preferably 10-40 mass% of the total amount of the curable composition.

The filler/matrix mass ratio (hereinafter also referred to simply as "F/M") in the curable composition is preferably 0.4-2.5, more preferably 0.6-2.0, and even more preferably 1.0-1.9.

The filler/matrix mass ratio refers to the mass ratio of the total amount of inorganic oxide to the total amount of the organosilane compound and the polyfunctional epoxy compound.

The curable composition can be obtained by mixing the above-described components. An exemplary method for producing the curable composition includes a step of mixing and stirring the inorganic oxide(s) and the ultraviolet absorber, and optionally the organosilane compound, the polyfunctional epoxy compound and the curing catalyst.

The curable composition can be used to form the hard coat layer of an optical member.

From the viewpoint of enhancing yellowing resistance, the thickness of the hard coat layer is preferably 0.5-50 µm, more preferably 5-20 µm, and even more preferably 1-5 µm.

### <Plastic Substrate>

Examples of the material of the plastic substrate include a polyurethane material such as a polythiourethane resin or a polyurethane resin; an epithio material such as a polysulfide resin; a polycarbonate material; and a diethylene glycol bisallyl carbonate material.

The material of the plastic substrate is preferably at least one resin selected from a polythiourethane resin, a polysulfide resin and a polyurethane resin, more preferably at least one resin selected from a polythiourethane resin and a polysulfide resin.

Examples of the plastic substrate include an eyeglass lens substrate, a goggle substrate, a safety shield substrate, and a helmet shield substrate.

The eyeglass lens substrate may be either a finished lens or a semifinished lens. There is no particular limitation on the surface shape of the lens substrate; the lens substrate may have any of e.g. a plane surface, a convex surface, and a concave surface.

The eyeglass lens of the present disclosure may be any of e.g. a unifocal lens, a multifocal lens, and a progressive power lens. For example, in the case of a progressive power lens, in general, a near vision zone and a transition zone (intermediate zone) are included in a lower area, while a distance vision zone is included in an upper area.

While there is no particular limitation on the thickness and the diameter of the eyeglass lens substrate, the thickness is generally 1-30 mm, and the diameter is generally 50-100 mm.

The refractive index ne of the eyeglass lens substrate is, for example, 1.50-1.80, and may be 1.53-1.80, or 1.55-1.80, or 1.58-1.80, or 1.60-1.80, or 1.67-1.80, or 1.70-1.80.

### <Other Layer (s)>

The optical member may additionally include a primer layer between the plastic substrate and the hard coat layer, and/or an antireflective layer on the hard coat layer.

In order to ensure the transparency of the optical member, the average transmittance of light having a wavelength of 380-780 nm of the optical member is preferably 60-90%, more preferably 70-98%, and even more preferably 75-95%.

The average transmittance of light having a wavelength of 380-780 nm is measured by the method described in the Examples below.

### [Optical Member Production Method]

From the viewpoint of obtaining an optical member which exhibits excellent yellowing resistance under ultraviolet irradiation, an optical member production method according to an embodiment includes a step of coating the above curable composition onto the plastic substrate and curing the composition to form the hard coat layer.

The curable composition is coated onto the plastic substrate by a common method such as a dipping method, a spin method or a spray method. A dipping method and a spin method are preferred in terms of surface accuracy.

Prior to the coating of the curable composition onto the substrate, the substrate may be subjected to a chemical treatment with an acid, an alkali or an organic solvent, a physical treatment e.g. with plasma or ultraviolet light, or a cleaning treatment with a detergent.

The curable composition may be coated onto the plastic substrate either directly or via another layer.

The curing of the curable composition may be performed either by heating or by irradiation with light.

In the case of curing by heating, the curing temperature of the curable composition is preferably 60-180°C, more preferably 70-150°C, and even more preferably 80-130°C.

In the case of curing by heating, the heating time is preferably 30 minutes to 5 hours, more preferably 40 minutes to 4 hours, and even more preferably 45 minutes to 3 hours. Examples

The following examples illustrate the present invention in greater detail. The below-described operations and evaluations were performed in the atmosphere at room temperature (about 20-25°C) unless otherwise specified.

### [Measurement Methods]

### <Transmittance Spectrum>

Transmittances of light having a wavelength range of 280-780 nm were measured using a spectrophotometer "U-4100" (manufactured by Hitachi High-Technologies Corporation).

### <Average Transmittance of Light Having a Wavelength of 380-780 nm>

An average transmittance of light having a wavelength of 380-780 nm was calculated from the results of the above measurement of transmittances.

### [Evaluation Method]

### <Cracking Resistance Test>

An optical member was prepared and, using a QUV ultraviolet fluorescent tube-type accelerated weathering tester (manufactured by Q-Lab Corporation), was irradiated with ultraviolet light at 0.77 W/m² for 10 days in a high-temperature and high-humidity environment of 45°C and 90% relative humidity. A geometric center area and a peripheral area of the optical member after the test were observed microscopically and evaluated in accordance with the following criteria.

### (Evaluation Criteria)

A: No crack was found in the geometric center area and the peripheral area of the optical member.
B: A crack was found in one of the geometric center area and the peripheral area of the optical member, whereas no crack was found in the other.
C: A crack was found in both of the geometric center area and the peripheral area of the optical member.
D: A clear crack was found in one of the geometric center area and the peripheral area of the optical member, while a slight crack was found in the other.
E: A clear crack was found in both of the geometric center area and the peripheral area of the optical member.

### <Example 1>

### (Preparation of Curable Composition)

The materials shown in Table 1 were mixed and stirred in a container, followed by filtration to obtain a curable composition.

### (Coating and Curing)

An eyeglass lens substrate (S +0.00D, refractive index 1.67, diameter 75 mm, thickness 5.0 mm, polythiourethane resin) was immersed in a 10 mass % aqueous sodium hydroxide solution at 45°C for 5 minutes, followed by sufficient drying.

Thereafter, the above-prepared curable composition was coated by a spin method (rotational speed: 1000 rpm).

The coated substrate was heated at 80°C for 20 minutes, and then heated at 110°C for 2 hours to thermally cure the curable composition and form a hard coat layer. The hard coat layer was formed on both surfaces of the substrate by the above operation. The thickness of the obtained hard coat layer was 3.1 µm.

The thus-obtained eyeglass lens was evaluated in the above-described manner. The results are shown in Table 1.

### <Examples 2-5 and Comparative Examples 1-6>

A hard coat layer was formed in the same manner as in Example 1 except for changing the amounts of the components of the curable composition as shown in Table 1. The samples obtained were each evaluated in the above-described manner. The results are shown in Tables 1-4.

For the eyeglass lens produced in Example 1, the transmittance spectrum was measured. The results are shown in FIG. 1. The luminous transmittance was 80%.

**Table 1**

| | | | Example 1 | | | Example 2 | | | Example 3 | | |
|---|---|---|---|---|---|---|---|---|---|---|---|
| | | | Amount (mass % ) | AI (mass % )*1 | Cured product (mass % )*2 | Amount (mass % ) | AI (mass % )*1 | Cured product (mass % )*2 | Amount (mass % ) | AI (mass % )*1 | Cured product (mass % )*2 |
| Curable comp. | Inorganic oxide | Zircon ia sol | 40.5 | 39.4 | 44.4 | 40.0 | 38.2 | 43.0 | 39.7 | 37.5 | 42.1 |
| | | Titani a sol | 25.9 | 12.7 | 14.3 | 25.6 | 12.3 | 13.8 | 25.4 | 12.1 | 13.5 |
| | Organosilan e compound | Si-1 | 16.1 | 39.3 | 31.5 | 15.9 | 38.2 | 30.5 | 15.8 | 37.5 | 29.8 |
| | Curing catalyst | A1 (acac)₃ | 1.4 | 3.3 | 3.8 | 1.4 | 3.2 | 3.7 | 1.3 | 3.2 | 3.6 |
| | UV absorber | UV-1 | 1.6 | 4.0 | 4.5 | 2.2 | 5.3 | 6.0 | 3.0 | 7.1 | 8.0 |
| | Antioxidant | UO-1 | 0.5 | 1.3 | 1.5 | 1.1 | 2.7 | 3.0 | 1.1 | 2.7 | 3.0 |
| | Solvent | PGM | 8.3 | - | - | 8.2 | - | - | 8.2 | - | - |
| | | Water | 5.6 | - | - | 5.5 | - | - | 5.5 | - | - |
| Evalu ation | Cracking resistance | | A | | | A | | | A | | |

| | | | | | | | | | | | |
|---|---|---|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction | | | | | | | | | | | |

**Table 2**

| | | | Example 4 | | | Example 5 | | |
|---|---|---|---|---|---|---|---|---|
| | | | Amount (mass %) | AI (mass % )*1 | Cured product (mass % )*2 | Amount (mass %) | AI (mass % )*1 | Cured product (mass % )*2 |
| Curable comp. | Inorganic oxide | Zirconi a sol | 39.4 | 36.7 | 41.1 | 39.1 | 36.2 | 40.4 |
| | | Titania sol | 25.2 | 11.8 | 13.2 | 25.0 | 11.6 | 13.0 |
| | Organosilane compound | Si-1 | 15.7 | 36.7 | 29.1 | 15.5 | 36.1 | 28.6 |
| | Curing catalyst | A1 (acac)₃ | 1.3 | 3.1 | 3.5 | 1.3 | 3.1 | 3. 4 |
| | UV absorber | UV-1 | 3.8 | 8.9 | 10.0 | 3.9 | 8.9 | 10.0 |
| | Antioxidant | UO-1 | 1.1 | 2.7 | 3.0 | 1.7 | 4.0 | 4.5 |
| | Solvent | PGM | 8.1 | - | - | 8.0 | - | - |
| | | Water | 5.4 | - | - | 5.4 | - | - |
| Evaluatio n | Cracking resistance | | A | | | A | | |

| | | | | | | | | |
|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction | | | | | | | | |

**Table 3**

| | | | Comp. Example 1 | | | Comp. Example 2 | | | Comp. Example 3 | | |
|---|---|---|---|---|---|---|---|---|---|---|---|
| | | | Amount (mass % ) | AI (mass % )*1 | Cured product (mass % )*2 | Amount (mass % ) | AI (mass % )*1 | Cured product (mass % )*2 | Amount (mass % ) | AI (mass % )*1 | Cured product (mass % )*2 |
| Curable comp. | Inorganic oxide | Zircon ia sol | 41.4 | 41.6 | 47.3 | 41.0 | 40.5 | 45.9 | 40.5 | 39.4 | 44.4 |
| | | Titani a sol | 26.5 | 13.4 | 15.2 | 26.2 | 13.0 | 14.8 | 25.9 | 12.7 | 14.3 |
| | Organosilan e compound | Si-1 | 16.5 | 41.5 | 33.5 | 16.3 | 40.4 | 32.5 | 16.1 | 39.3 | 31.5 |
| | Curing catalyst | A1 (acac)₃ | 1.4 | 3.5 | 4.0 | 1.4 | 3.4 | 3.9 | 1.4 | 3.3 | 3.8 |
| | UV absorber | UV-1 | - | - | - | 1.1 | 2.6 | 3.0 | 2.2 | 5.3 | 6.0 |
| | Antioxidant | UO-1 | - | - | - | - | - | - | - | - | - |
| | Solvent | PGM | 8.5 | - | - | 8.4 | - | - | 8.3 | - | - |
| | | Water | 5.7 | - | - | 5.6 | - | - | 5.6 | - | - |
| Evalu ation | Cracking resistance | | E | | | E | | | E | | |

| | | | | | | | | | | | |
|---|---|---|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction | | | | | | | | | | | |

**Table 4**

| | | | Comp. Example 4 | | | Comp. Example 5 | | | Comp. Example 6 | | |
|---|---|---|---|---|---|---|---|---|---|---|---|
| | | | Amount (mass % ) | AI (mass % )*1 | Cured product (mass % )*2 | Amount (mass % ) | AI (mass % )*1 | Cured product (mass % )*2 | Amount (mass % ) | AI (mass % )*1 | Cured product (mass % )*2 |
| Curable comp. | Inorganic oxide | Zircon ia sol | 39.5 | 37.1 | 41.6 | 41.0 | 40.5 | 45.9 | 40.5 | 39.4 | 44.4 |
| | | Titani a sol | 25.3 | 11.9 | 13.4 | 26.2 | 13.0 | 14.8 | 25.9 | 12.7 | 14.3 |
| | Organosilan e compound | Si-1 | 15.7 | 37.1 | 29.5 | 16.3 | 40.4 | 32.5 | 16.1 | 39.3 | 31.5 |
| | Curing catalyst | A1 (acac)₃ | 1.3 | 3.2 | 3.5 | 1.4 | 3.4 | 3.9 | 1.4 | 3.3 | 3.8 |
| | UV absorber | UV-1 | 4.5 | 10.7 | 12.0 | - | - | - | - | - | - |
| | Antioxidant | UO-1 | - | - | - | 1.1 | 2.6 | 3.0 | 2.2 | 5.3 | 6.0 |
| | Solvent | PGM | 8.1 | - | - | 8.4 | - | - | 8.3 | - | - |
| | | Water | 5.4 | - | - | 5.6 | - | - | 5.6 | - | - |
| Evalu ation | Cracking resistance | | D | | | D | | | B | | |

| | | | | | | | | | | | |
|---|---|---|---|---|---|---|---|---|---|---|---|
| *1 The percentage of ingredients other than a solvent in a curable composition *2 A theoretical value as calculated based on the assumption that an Si-O-Si moiety is formed from two Si-OR moieties of the organosilane compound, and all the Si-OR groups undergo the reaction | | | | | | | | | | | |

The materials listed in Tables 1-4 are as follows.
(Inorganic Oxide)
   Zirconia sol: zirconium oxide dispersion (dispersion medium: methanol)
   Titania sol: titanium oxide dispersion (dispersion medium: propylene glycol monomethyl ether)
(Organosilane Compound)
   Si-1: 3-glycidoxypropyltrimethoxysilane
(Curing Catalyst)
   Al(acac)₃: tris (acetylacetonato) aluminum (III) [Al(acac)₃]
(Solvent)
   PGM: propylene glycol monomethyl ether
(Ultraviolet Absorber)
   UV-1: 2-(2,4-dihydroxyphenyl)-2H-benzotriazole
(Antioxidant)
   UO-1: BHT

As can be seen from comparison of the Examples with the Comparative Examples, the hard coat layers of the Examples, each formed from a curable compositions according to the present invention, exhibit superior cracking resistance under UV irradiation and high-humidity conditions.

## Claims

1. An eyeglass lens comprising
(i) a plastic substrate and
(ii) a hard coat layer which is a cured product of a curable composition comprising
(a) an inorganic oxide containing an inorganic oxide (a1) having an absorption edge at a wavelength of 300-450 nm and being at least one of titanium oxide, zirconium oxide, tantalum oxide, antimony oxide, tin oxide, tungsten oxide and yttrium oxide,
(b) an UV-absorber, which is a compound of formula (1) : 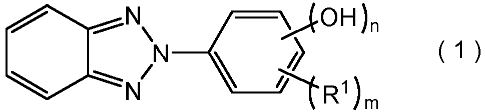 wherein n is an integer of 1-3, R¹ is an aliphatic C₁₋₃-hydrocarbon group, and m is 0 or 1, and
(c) an antioxidant.

2. The eyeglass lens of claim 1, wherein the content of the inorganic oxide (a1) is ≥ 10 mass% per 100 mass% of the total amount of inorganic oxide (a).

3. The eyeglass lens of claim 1 or 2, wherein the content of the antioxidant (c) in the cured product is preferably 1-15 mass%.

4. The eyeglass lens of any of claims 1-3, wherein the antioxidant (c) is 2,6-di-tert-butyl-p-cresol.

5. The eyeglass lens of any of claims 1-4, wherein the content of the UV-absorber (b) in the cured product is 0.5-15 mass%.

6. The eyeglass lens of any of claims 1-5, wherein the UV-absorber (b) comprises an organic compound having at least one hydroxy group.

7. The eyeglass lens of any of claims 1-6, wherein the thickness of the hard coat layer is 0.5-50 µm.

8. A method for producing an eyeglass lens, comprising coating a curable composition comprising
(a) an inorganic oxide containing an inorganic oxide (a1) having an absorption edge at a wavelength of 300-450 nm and being at least one of titanium oxide, zirconium oxide, tantalum oxide, antimony oxide, tin oxide, tungsten oxide and yttrium oxide,
(b) an UV-absorber, which is a compound of formula (1): 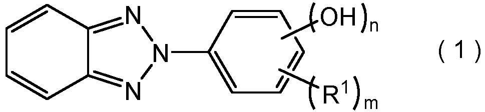 wherein n is an integer of 1-3, R¹ is an aliphatic C₁₋₃-hydrocarbon group, and m is 0 or 1, and
(c) an antioxidant,
onto a plastic substrate and curing the composition to form a hard coat layer.

## Patentansprüche

1. Brillenglas, umfassend
(i) ein Kunststoffsubstrat und
(ii) eine Hartbeschichtungsschicht, die ein gehärtetes Produkt einer härtbaren Zusammensetzung ist, die umfasst:
(a) ein anorganisches Oxid, enthaltend ein anorganisches Oxid (a1), das eine Absorptionskante bei einer Wellenlänge von 300 bis 450 nm aufweist und mindestens eines von Titanoxid, Zirconiumoxid, Tantaloxid, Antimonoxid, Zinnoxid, Wolframoxid und Yttriumoxid ist,
(b) einen UV-Absorber, der eine Verbindung der Formel (1) ist: 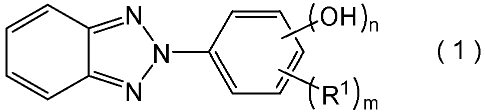 worin n eine ganze Zahl von 1-3 ist, R¹ eine aliphatische C₁₋₃-Kohlenwasserstoffgruppe ist und m 0 oder 1 ist, und
(c) ein Antioxidationsmittel.

2. Brillenglas gemäß Anspruch 1, wobei der Gehalt des anorganischen Oxids (a1) ≥ 10 Massen-% pro 100 Massen-% der Gesamtmenge an anorganischem Oxid (a) beträgt.

3. Brillenglas gemäß Anspruch 1 oder 2, wobei der Gehalt des Antioxidationsmittels (c) in dem gehärteten Produkt bevorzugt 1-15 Massen-% beträgt.

4. Brillenglas gemäß einem der Ansprüche 1-3, wobei das Antioxidationsmittel (c) 2,6-Di-tert-butyl-p-kresol ist.

5. Brillenglas gemäß einem der Ansprüche 1-4, wobei der Gehalt des UV-Absorbers (b) in dem gehärteten Produkt 0,5-15 Massen-% beträgt.

6. Brillenglas gemäß einem der Ansprüche 1-5, wobei der UV-Absorber (b) eine organische Verbindung mit mindestens einer Hydroxygruppe umfasst.

7. Brillenglas gemäß einem der Ansprüche 1-6, wobei die Dicke der Hartbeschichtungsschicht 0,5-50 µm beträgt.

8. Verfahren zur Herstellung eines Brillenglases, umfassend das Schichten einer härtbaren Zusammensetzung, umfassend
(a) ein anorganisches Oxid, enthaltend ein anorganisches Oxid (a1), das eine Absorptionskante bei einer Wellenlänge von 300 bis 450 nm aufweist und mindestens eines von Titanoxid, Zirconiumoxid, Tantaloxid, Antimonoxid, Zinnoxid, Wolframoxid und Yttriumoxid ist,
(b) einen UV-Absorber, der eine Verbindung der Formel (1) ist: 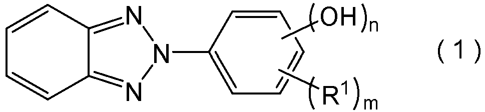 worin n eine ganze Zahl von 1-3 ist, R¹ eine aliphatische C₁₋₃-Kohlenwasserstoffgruppe ist und m 0 oder 1 ist, und
(c) ein Antioxidationsmittel,
auf ein Kunststoffsubstrat und das Härten der Zusammensetzung, um eine Hartbeschichtungsschicht zu bilden.

## Revendications

1. Verre de lunettes comprenant
(i) un substrat en matière plastique et
(ii) une couche de revêtement dur qui est un produit durci d'une composition durcissable comprenant
(a) un oxyde inorganique contenant un oxyde inorganique (a1) présentant un seuil d'absorption à une longueur d'onde de 300nm à 450nm et étant au moins l'un parmi l'oxyde de titane, l'oxyde de zirconium, l'oxyde de tantale, l'oxyde d'antimoine, l'oxyde d'étain, l'oxyde de tungstène et l'oxyde d'yttrium,
(b) un agent absorbeur des UV, qui est un composé de formule (1) : 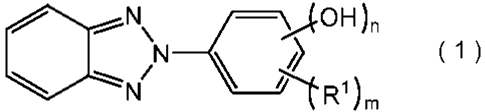 dans laquelle n est un entier de 1 à 3, R¹ est un groupe hydrocarboné aliphatique C₁₋₃, et m est égal à 0 ou 1, et
(c) un antioxydant.

2. Verre de lunettes selon la revendication 1, dans lequel la teneur en oxyde inorganique (a1) est ≥ 10 % en masse pour 100 % en masse de la quantité totale d'oxyde inorganique (a).

3. Verre de lunettes selon la revendication 1 ou 2, dans lequel la teneur en antioxydant (c) dans le produit durci est de préférence de 1 à 15 % en masse.

4. Verre de lunettes selon l'une quelconque des revendications 1 à 3, dans lequel l'antioxydant (c) est le 2,6-di-tert-butyl-p-crésol.

5. Verre de lunettes selon l'une quelconque des revendications 1 à 4, dans lequel la teneur en agent absorbeur des UV (b) dans le produit durci est de 0,5 à 15 % en masse.

6. Verre de lunettes selon l'une quelconque des revendications 1 à 5, dans lequel l'absorbeur des UV (b) comprend un composé organique présentant au moins un groupe hydroxy.

7. Verre de lunettes selon l'une quelconque des revendications 1 à 6, dans lequel l'épaisseur de la couche de revêtement dur est de 0,5 à 50 µm.

8. Procédé de fabrication d'un verre de lunettes, comprenant le fait d'appliquer sous forme de revêtement une composition durcissable comprenant
(a) un oxyde inorganique contenant un oxyde inorganique (a1) présentant un seuil d'absorption à une longueur d'onde de 300nm à 450nm et étant au moins l'un parmi l'oxyde de titane, l'oxyde de zirconium, l'oxyde de tantale, l'oxyde d'antimoine, l'oxyde d'étain, l'oxyde de tungstène et l'oxyde d'yttrium,
(b) un agent absorbeur des UV, qui est un composé de la formule (1) : 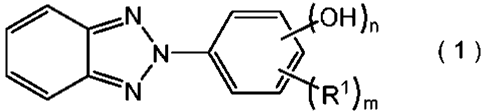 dans laquelle n est un entier de 1 à 3, R¹ est un groupe hydrocarboné aliphatique C₁₋₃, et m est égal à 0 ou 1, et
(c) un antioxydant,
sur un substrat en matière plastique, et le fait de réaliser le durcissement de la composition pour former une couche de revêtement dur.
